# DEMANDE DE BREVET EUROPEEN

(11) **EP 1 642 792 A1**
(43) Date de publication de la demande: **05.04.2006**
(21) Numéro de dépôt: 05300772.0
(22) Date de dépôt: 26.09.2005
(51) Int. Cl.: B60S 1/50

(54) **Ensemble de réservoirs d'eau de lavage des élements vitrés d'un véhicule automobile**

(30) Priorité: 30.09.2004 FR 0452201
(71) Demandeur: Peugeot Citroen Automobiles SA, 78140 Vélizy Villacoublay (FR)
(72) Inventeur: Jeuffe, Gérard, 78810 Feucherolles (FR); Leplongeon, Denis, 91090 Lisses (FR)

(57) **Abrégé**

Ensemble de réservoirs d'eau de lavage des surfaces vitrées d'un véhicule automobile, caractérisé en ce qu'il comporte un réservoir dit principal (2) d'eau de lavage des vitres du pare-brise avant et de la lunette arrière de ce véhicule, et des moyens propres à permettre de lui accoler un réservoir dit auxiliaire (3), distinct du réservoir principal, qui s'intègre directement avec ce dernier pour accroître le volume global d'eau disponible.

## Description

La présente invention est relative à un perfectionnement apporté aux réservoirs d'eau de lavage des éléments vitrés d'un véhicule automobile.

L'invention vise à permettre de disposer d'une réserve d'eau de volume suffisant pour fournir aux gicleurs et balais d'essuie-glace qui se déplacent sur les surfaces vitrées correspondantes, un débit d'eau approprié afin de permettre d'en assurer le nettoyage efficace en éliminant les particules, insectes et autres salissures diverses qui ont pu se déposer sur ces surfaces et s'y coller, surtout par temps sec, en réduisant la parfaite vision du conducteur, de jour comme de nuit.

Certains véhicules, dits de haut de gamme, comportent, outre des balais de nettoyage du pare-brise avant et de la lunette arrière, des moyens additionnels qui permettent de laver et balayer les parois vitrées des projecteurs de leurs phares avant.

Or, ces moyens de lavage consomment généralement une quantité d'eau notable, de sorte que si cette eau est directement prélevée dans le réservoir normalement alloué au lavage du pare-brise avant et de la lunette arrière, le niveau dans ce réservoir risque de baisser très rapidement et même de s'épuiser totalement en réduisant à néant l'efficacité du nettoyage souhaité pour les surfaces vitrées correspondantes.

Il est donc généralement nécessaire de prévoir dans le compartiment moteur du véhicule ou le cas échéant en d'autres endroits appropriés de la carrosserie, deux réservoirs d'eau distincts, l'un dévolu à la fourniture de l'eau nécessaire au lavage grève le prix de revient.

La présente invention concerne un perfectionnement apporté aux réservoirs d'eau de lavage des surfaces vitrées d'un véhicule automobile qui évite cet inconvénient.

A cet effet, l'invention concerne un ensemble de réservoirs d'eau de lavage des surfaces vitrées d'un véhicule automobile, comportant un réservoir dit principal d'eau de lavage des vitres du pare-brise avant et de la lunette arrière de ce véhicule, ainsi que des moyens propres à permettre de lui accoler un réservoir dit auxiliaire, distinct du réservoir principal, qui d'intègre directement avec ce dernier pour accroître le volume global d'eau disponible, caractérisé en ce que la paroi extérieure du réservoir principal comporte au moins une nervure en saillie, propre à coopérer avec une rainure en creux de même profil ménagée dans la paroi du réservoir auxiliaire, ou inversement, afin d'assurer l'intégration mutuelle des deux réservoirs par emboîtement de la nervure dans la rainure, le réservoir auxiliaire comportant un collet de liaison en relief vers l'extérieur, apte à s'engager dans un orifice de communication prévu dans le réservoir principal lorsque les deux réservoirs sont accolés.

L'invention permet ainsi, pour le véhicule de base de la gamme, de monter en série sur celui-ci uniquement le réservoir principal et, seulement pour les véhicules dotés des accessoires les plus sophistiqués, comportant notamment des balais de nettoyage des projecteurs avant, un réservoir auxiliaire qui s'adapte directement sur le réservoir principal sans qu'il y ait lieu de modifier ce dernier, lequel est donc commun sans distinction à tous les véhicules de la même gamme.

Bien entendu, le réservoir principal peut comporter des rainures et le réservoir auxiliaire des nervures coopérant mutuellement.

Avantageusement, le réservoir principal présente une plate-forme plane d'appui plan dans laquelle est ménagé l'orifice de communication et sur laquelle repose le fond inférieur du réservoir auxiliaire, muni du collet de liaison en relief.

De préférence, chacun des deux réservoirs supporte une pompe de circulation pour le prélèvement de l'eau contenue dans le réservoir correspondant et en assurer le refoulement sous pression.

D'autres caractéristiques du perfectionnement selon l'invention apparaîtront encore à travers la description qui suit d'un exemple de réalisation, donné à titre indicatif et non limitatif, en référence au dessin annexé, sur lequel :
- Les Figures 1 et 2 sont des vues en perspective d'un ensemble de lavage pour véhicule automobile comportant un réservoir principal et un réservoir auxiliaire agencés conformément à l'invention, les deux réservoirs étant illustrés séparés sur la Figure 1 et accolés sur la Figure 2.
- La Figure 3 est une vue en coupe transversale d'une fraction des deux réservoirs, illustrant plus spécialement leurs moyens de communication.

Sur ces figures, la référence 1 désigne un ensemble conforme à l'invention, comportant un premier réservoir 2, dit principal, contenant un volume d'eau destiné au lavage des vitres du pare-brise avant et/ou de la lunette arrière du véhicule, premier réservoir 2, dit principal, contenant un volume d'eau destiné au lavage des vitres du pare-brise avant et/ou de la lunette arrière du véhicule, à l'aide de moyens en eux-mêmes bien connus dans la technique, et un second réservoir 3, dit auxiliaire, lequel est prévu pour contenir un volume complémentaire d'eau utilisé pour le nettoyage des projecteurs des phares avant du véhicule, lorsque ce dernier, dans une version de haut de gamme, comporte un tel accessoire.

Sur ces figures, le réservoir principal 2 est configuré de telle sorte qu'il entoure en partie au moins la boîte de dégazage 4 prévue dans le circuit de refroidissement du moteur du véhicule, cette boîte de dégazage comportant un bouchon amovible 5 pour le remplissage de ce circuit avec un produit liquide approprié et étant séparée de la surface en regard du réservoir principal 2 par un espace intermédiaire dans lequel est avantageusement logé un corps creux 6, à double cloison, fermé sur lui- même et constituant un écran thermique entre le réservoir et la boîte.

Une disposition particulière de ce genre, avantageusement mais non nécessairement mise en oeuvre dans le cadre de la présente invention, est plus spécialement décrite et revendiquée dans une demande de brevet parallèle déposée ce jour au nom de la Société demanderesse, pour un dispositif de réchauffage de l'eau des lave-vitres d'un véhicule automobile à partir des calories provenant de la boîte de dégazage du circuit de refroidissement de ce véhicule.

Conformément à la présente invention, le réservoir principal 2, dont le volume est fonction de l'usage auquel il est destiné et qui dépend de la place disponible pour son logement, généralement dans le compartiment moteur du véhicule, est réalisé en un matériau approprié, soit en tôle métallique emboutie, soit de préférence en matière plastique rigide, moulée, et comporte, venue de fabrication, au moins une nervure 7 en saillie externe, s'étendant verticalement sur une de ses parois.

Le réservoir auxiliaire 3, également réalisé de façon préférentielle en matière plastique comme le réservoir 2, comporte une rainure 8, également verticale, aménagée de telle sorte qu'elle puisse coopérer avec la nervure 7 afin que les deux réservoirs s'emboîtent mutuellement l'un dans l'autre par glissement dans le sens vertical de ces nervure et rainure, en formant une structure directement intégrée. Bien entendu, la nervure 7 et la rainure 8 coopérant mutuellement pourraient être inversées, la nervure étant prévue sur le réservoir auxiliaire 3 et la rainure sur le réservoir principal.

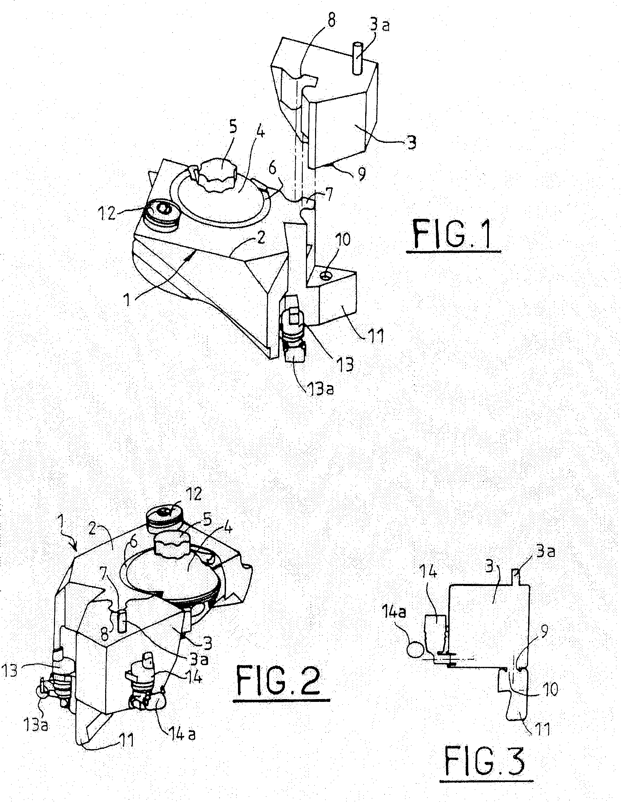

Dans son fond inférieur, plan, le réservoir auxiliaire 3 comporte un collet 9 en saillie vers l'extérieur, aménagé pour lui permettre de s'engager directement, notamment par l'intermédiaire d'un joint d'étanchéité (non représenté), dans un orifice de communication 10 avec la partie correspondante 11 du réservoir principal 2 qui comporte à cet effet une plate-forme d'appui par laquelle les deux réservoirs sont ainsi accolés (Figure 3).

Sur les figures, le réservoir principal 2 est représenté avec son bouchon 12 fermant son orifice de remplissage, ce réservoir étant directement associé à une pompe de circulation 13 délivrant l'eau prélevée dans celui-ci vers les moyens de lavage du pare-brise avant et de la lunette arrière par une tubulure 13a.

Une cheminée 3a est de façon classique prévue à la partie supérieure du réservoir auxiliaire 3 pour permettre l'évacuation de l'air lors du remplissage du réservoir principal 2 par son bouchon 12 et, en suivant, de ce réservoir auxiliaire 3 à travers l'orifice 10 assurant la communication de l'un à l'autre.

Le réservoir auxiliaire 3 comporte de façon similaire une pompe de circulation 14 et une tubulure de sortie 14a par laquelle l'eau prélevée dans ce réservoir est indépendamment transmise sous pression aux moyens de nettoyage des projecteurs des phares avant du véhicule.

On réalise ainsi un ensemble compact, permettant d'assurer les fonctions de lavage des surfaces vitrées d'un véhicule automobile, cet ensemble comportant toujours un réservoir principal propre à équiper toute la gamme de ce véhicule et sur lequel peut être aisément mis en place un réservoir auxiliaire dans le cas seulement où le véhicule considéré comporte des moyens de lavage et de nettoyage de ses projecteurs, cette solution simple évitant l'usage de deux réservoirs dont la contenance et le profil doivent être étudiés séparément pour chaque type de véhicule dans cette gamme.

Bien entendu, il va de soi que l'invention ne se limite pas à l'exemple de réalisation plus spécialement décrit et représenté ; elle en embrasse au contraire toutes les variantes.

## Revendications

1. Ensemble de réservoirs d'eau de lavage des surfaces vitrées d'un véhicule automobile, comportant un réservoir dit principal (2) d'eau de lavage des vitres du pare-brise avant et de la lunette arrière de ce véhicule, ainsi que des moyens propres à permettre de lui accoler un réservoir dit auxiliaire (3), distinct du réservoir principal, qui s'intègre directement avec ce dernier pour accroître le volume global d'eau disponible, **caractérisé en ce que** la paroi extérieure du réservoir principal (2) comporte au moins une nervure en saillie (7), propre à coopérer avec une rainure en creux (8) de même profil ménagée dans la paroi du réservoir auxiliaire (3), ou inversement, afin d'assurer l'intégration mutuelle des deux réservoirs par emboîtement de la nervure dans la rainure, le réservoir auxiliaire (3) comportant un collet de liaison (9) en relief vers l'extérieur, apte à s'engager dans un orifice de communication (10) prévu dans le réservoir principal (2) lorsque les deux réservoirs sont accolés.

2. Ensemble selon la revendication 1, **caractérisé en ce qu'**un joint d'étanchéité est prévu au droit de l'orifice de communication (10) entre le réservoir principal (2) et le réservoir auxiliaire ( 3).

3. Ensemble selon l'une des revendications 1 ou 2, **caractérisé en ce que** le réservoir auxiliaire (3) comporte à sa partie supérieure une cheminée (3a) d'évacuation d'air.

4. Ensemble selon l'une quelconque des revendications 1 à 3, **caractérisé en ce que** le réservoir principal (2) présente une plate-forme plane d'appui plan dans laquelle est ménagé l'orifice de communication (10) et sur laquelle repose le fond inférieur du réservoir auxiliaire (3), muni du collet de liaison en relief (9).

5. Ensemble selon l'une quelconque des revendications 1 à 4, **caractérisé en ce que** chacun des deux réservoirs (2,3) supporte une pompe de circulation (13,14) pour le prélèvement de l'eau contenue dans le réservoir correspondant et en assurer le refoulement sous pression.
